# EUROPEAN PATENT APPLICATION

(11) **EP 1 595 928 A1**
(43) Date of publication of application: **16.11.2005**
(21) Application number: 05252956.7
(22) Date of filing: 13.05.2005
(51) Int. Cl.: C09J 7/02, C09J 7/00, B65H 37/00

(54) **Adhesive dispensing tape including a transparent carrier material**

(30) Priority: 14.05.2004 US 846269
(71) Applicant: Glue Dots International LLC, New Berlin, WI 53145 (US)
(72) Inventor: Downs, John P., Colgate Wisconsin 53071 (US); Daun, Robin R., Waukesha Wisconson 53189 (US)
(74) Representative: Copsey, Timothy Graham

(57) **Abstract**

An adhesive dispensing tape including a transparent carrier material and pressure sensitive adhesive segments attached thereto is disclosed. The transparent carrier material permits the adhesive segments to be precisely positioned onto a craft project, thereby eliminating the guess work associated with placement of adhesives. Thus, the pressure sensitive adhesives may thereby be dispensed onto any item in exactly the proper location.

## Description

### BACKGROUND OF THE INVENTION

Field of the Invention -- The present invention relates generally to adhesive segment dispensing tape, and more particularly to an adhesive segment dispensing tape having a transparent or semi-transparent release liner to enable the easy positioning and placement of adhesive segments.

In recent years, *crafting,* such as scrapbooking, rubber stamping, sewing, gift basket making, and candlemaking have become increasing popular. As these hobbies have developed over time, a large number of specialty products have evolved for specific application in the craft making arts.

Probably the most popular crafting hobby to date is the art of making a scrapbook. Today's scrapbooks are more than just an assembly of photographs. Rather, scrapbooks are decorated, organized collections of drawings, paper crafts, letters, cards, keepsakes, newspaper clippings, and other momentos, in addition to photographs and personal journal inscriptions.

The scrapbook industry has developed specialized supplies such as books, papers, fabrics, pens, inks, and adhesives for the assembly of a scrapbook. Further, the advent of digital photograph and desktop publishing has also facilitated the availability of customized, carefully selected photographs and drawings for inclusion into a scrapbook project. Indeed, there are several publications, including books and monthly scrapbooking magazines devoted to the scrapbooking topic that are available for scrapbooking enthusiasts.

Decoration of a scrapbook, candle, gift basket, or other craft project includes the necessary arrangement and adhesion of decorative and specialty items to the project. Typically, hot glue or liquid glue has been used for these types of projects. However, hot glue guns can be dangerous, especially for younger crafters, and the high temperature of the glue can damage or distort the material to which it is applied. Further, liquid glues can be messy and require significant drying time before additional steps in the craft project can be taken. Liquid glue can also end up in unwanted locations on the craft item, detracting from the look of the finished product. Additionally, double sided tapes can be used, however, these tapes are bulky and conspicuous and thus detract from the look of the finished craft product.

Thermoplastic glue segments and/or pressure sensitive adhesive segments are another alternative for use in crafting. These types of adhesive segments are available on an opaque, paper backing material and are typically available in sheets or roll form. Such products are taught in U.S. Patent No. 5,935,670, U.S. Patent No. 6,319,442, and U.S. Patent No. 6,686,016, all to Downs, all of which assigned to the assignee of the present patent application, and all of which are hereby incorporated herein by reference. However, due to obstruction of the adhesive segments by the opaque backing material as the adhesive segments are being applied to an object, the adhesive segments are difficult to place on an item, especially where precise placement is required. In addition, once released from the backing material, the adhesive is difficult to remove and nearly impossible to reposition.

It is accordingly the primary objective of the present invention to provide an adhesive dispensing tape including pressure sensitive adhesive segments provided on a transparent backing material, the transparent backing material making it easy to place the adhesive in precise locations on an object. It is another objective of the present invention to provide an adhesive dispensing tape wherein the transparent backing/release material can be in sheet or roll form, and can include perforations for separating individual adhesive segments, or alternatively, can be made without perforations to permit a continuous segment of adhesive to be precisely placed on an object.

It is also an objective of the present invention to provide a wide variety of adhesive dispensing tapes for use in specialty projects, including pre-metered adhesives in the form of specific shapes, sizes, colors, and/or scents for easy and precise application to a craft project. It is a further objective of the present invention to provide an adhesive dispensing tape or sheet including a transparent backing material for use in a variety of applications, including craft making and household applications as well as commercial and/or industrial applications.

The adhesive dispensing tape of the present invention must also be of construction which is practical and easy to use, and it should also require little or no skill on the part of the user to use. In order to enhance the market appeal of the adhesive dispensing tape of the present invention, it should also be of inexpensive construction to thereby afford it the broadest possible market. Finally, it is also an objective that all of the aforesaid advantages and objectives of the adhesive dispensing tape of the present invention be achieved without incurring any substantial relative disadvantage.

### SUMMARY OF THE INVENTION

The disadvantages and limitations of the background art discussed above are overcome by the present invention. With this invention, an adhesive dispensing tape for precise placement of a pressure sensitive adhesive is provided. The adhesive dispensing tape of the present invention is constructed of a transparent or substantially transparent carrier/backing material.

The carrier material is preferably constructed of a transparent polyester film having a heat resistance of up to approximately 500 degrees Fahrenheit. The carrier material may instead be constructed of any other transparent or semi-transparent material capable of withstanding temperatures of approximately 300 to 385 degrees Fahrenheit without deformation, although the characteristics will depend on the type of adhesive that will be applied to the carrier material. Such materials include, but are not limited to, polyester, polyethylene, polyvinyl chloride (PVC), vinyl, polystyrene, polypropylene, and polyimide.

Each surface of the polyester carrier material is covered with a silicone release coating in order to provide the carrier material with the ability easily release the adhesive segment. The carrier material is differentially coated with silicone such that the first release surface of the carrier material (the first side) provides less release than the second release surface of the carrier material so that the adhesive segments adhere more strongly to the first release surface than to the second release surface (the second side).

The adhesive is applied to the first release surface of the carrier material by any method well known to those skilled in the art, and may be accomplished according to the patents which are incorporated by reference above. The adhesive can be applied to the carrier material in any number of shapes, sizes, thickness, colors, and/or scents. In addition, the same carrier material may include adhesives having differing sizes, shapes, or colors of adhesives. The adhesive may be allowed to cool or "skin over" after application of the hot adhesive to the carrier sheet.

After application of the adhesive, the carrier material is preferably cut into individual strips and wound into coils. The differential release properties of the first and second release surfaces ensure that the adhesive will remain adhered to the first release surface as the coil is unwound.

The carrier material may be supplied as rolls or a continuous web prior to application of the adhesive and cut into strips thereafter. However, the carrier material may also be cut into sheets of adhesive segments, providing the user with another, complementary form of the present invention. As such, the carrier material may be cut or configured into any size or shape known to those skilled in the art before or after application of the adhesive, and depending on the desired end use application.

Because the carrier material is transparent, the adhesive is readily viewable through the carrier material from the second release surface of the carrier material. Thus, the adhesive can be easily positioned in a desired location on an object or craft project. Because the user can easily see exactly where the adhesive is going to be applied, the present invention eliminates any guess work associated with adhesive application, saving time and enhancing the look of the project.

Optionally, the carrier material may contain perforations for facilitating dispensing of the adhesive into individual segments, or, in one embodiment having a continuous segment, into short segments or longer pieces.

It may therefore be seen that the present invention teaches an adhesive dispensing tape including a transparent carrier sheet for precise placement of a pressure sensitive adhesive on an object. It can also be seen that the present invention teaches a wide variety of adhesive dispensing products wherein the transparent backing/carrier material can be in sheet or roll form, and can include perforations for separating individual adhesive segments, or alternatively, can include no perforations for permitting a continuous segment of adhesive to be precisely placed on an object.

The present invention also provides a wide variety of adhesive dispensing products including a transparent carrier material that can be use in a number of specialty projects, including pre-metered adhesives in the form of specific shapes, sizes, colors, and/or scents for easy and precise application to a craft project.

The adhesive dispensing tape including a transparent carrier material of the present invention is of a construction which is both practical and easy to use, and requires little or no skill on the part of the user to use. The adhesive dispensing tape including a transparent carrier material of the present invention is also of inexpensive construction to enhance its market appeal and to thereby afford it the broadest possible market. Finally, all of the aforesaid advantages and objectives of the adhesive dispensing tape of the present invention are achieved without incurring any substantial relative disadvantage.

### DESCRIPTION OF THE DRAWINGS

These and other advantages of the present invention are best understood with reference to the drawings, in which:

Fig. 1 is a roll of adhesive dispensing tape including a transparent carrier material having a continuous strip of adhesive carried thereupon which is manufactured according to the teachings of the present invention, showing optional perforations formed in the carrier material;

Fig. 2 is a side view of a portion of the adhesive dispensing tape illustrated in Fig. 1;

Fig. 3 is a top plan view of a section of adhesive dispensing tape similar to that illustrated in Fig. 1, showing the carrier material and adhesive but without perforations in the carrier material;

Fig. 4 is a second embodiment of the present invention, showing a roll of adhesive dispensing tape including a transparent carrier material and a plurality of circular adhesive segments carried thereupon, with perforations formed in the carrier material between each individual adhesive segment;

Fig. 5 is a plan view showing the application of the adhesive segments illustrated in Fig. 4 onto a particular location in a scrapbook;

Fig. 6 is a plan view of a section of a third embodiment of the present invention, showing adhesive line segments disposed on a transparent carrier material, and also showing perforations separating each individual adhesive line segment;

Fig. 7 is a plan view of a section of a fourth embodiment of the present invention, showing colored, adhesive stars disposed on a transparent carrier material, and also showing perforations separating each individual adhesive star;

Fig. 8 is a plan view of a fifth embodiment of the present invention, showing circular adhesive segments disposed on a transparent carrier material in sheet form; and

Fig. 9 is a sixth embodiment of the present invention, showing a roll of adhesive dispensing tape including two strips of transparent carrier material separated by a longitudinal perforation and a two adjacent rows of circular adhesive segments carried upon the two strips, with optional transverse perforations also formed in the carrier material between each laterally arrayed pair of adhesive segments.

### DETAILED DESCRIPTION OF THE PREFERRED EMBODIMENT

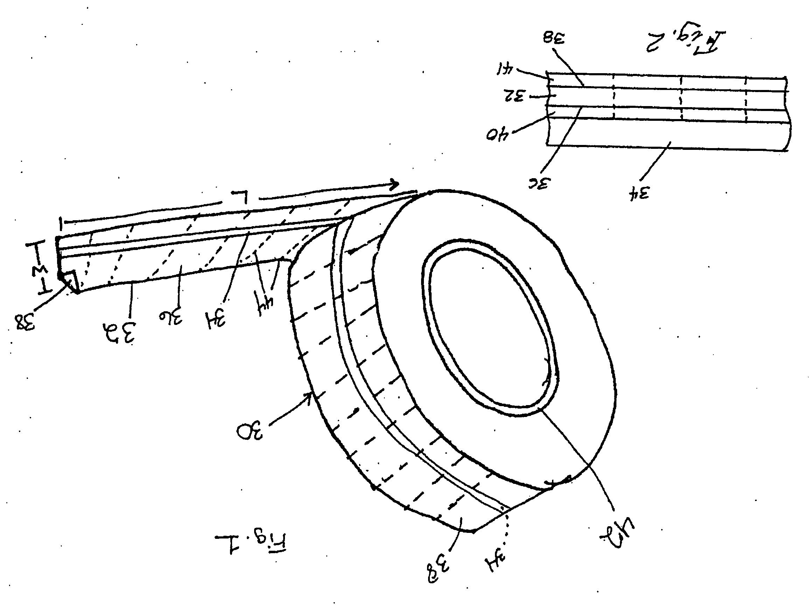

Fig. 1 shows a first embodiment of an adhesive dispensing tape according to the present invention. A roll of adhesive dispensing tape 30 is constructed of a transparent carrier material 32 having a strip of adhesive 34 disposed thereon.

The transparent carrier material 32 includes a first release surface 36 on one side thereof and a second release surface 38 on the other side thereof. The carrier material 32 is preferably constructed of a transparent polyester film. Because the adhesive is applied to the carrier material in a molten state, the polyester film or other material must be capable of withstanding temperatures of up to approximately about 500 degrees Fahrenheit without deformation.

Consistent with the broader aspects of the present invention, the carrier material 32 may be constructed of any flexible, transparent or semitransparent or tinted transparent material having a heat resistance of approximately about 300 to approximately about 385 degrees Fahrenheit without deformation. Further, a transparent material having a lower heat resistance may also be used depending on the type and temperature of adhesive applied to the carrier material. Such carrier materials can include, but are not limited to, polyester, polyethylene, polyvinyl chloride (PVC), vinyl, polystyrene, polyimide, polypropylene, and polyolefin.

Depending on the desired end-use product, the carrier material 32 may be provided either as a continuous web or as a roll and cut into narrow strips of carrier material containing a single row of adhesive segments either before or after adhesive application to provide multiple rolls of adhesive dispensing tape 30 each having an extended longitudinal dimension L and a transverse width dimension W, as illustrated in Fig. 1. As will be well known to those skilled in the art, the carrier material may be provided in any form, including a pre-sheeted form, or may be cut into sheets before or after adhesive application to provide, for example, a 3 inch by 5 inch sheet of adhesive segments (or any other desired size).

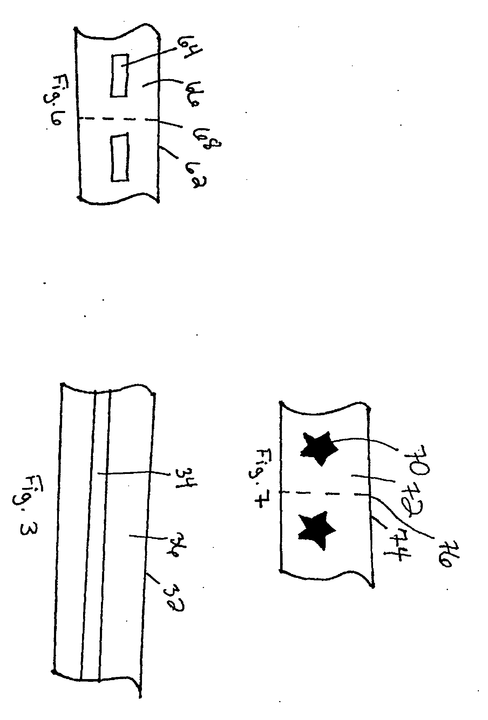

As best illustrated in Fig. 2, the carrier material 32 is coated on its first release surface 36 with a silicone release coating 40 and its second release surface 38 with a silicone release coating 41. The silicone release coating 40 on the first release surface 36 provides less release than the silicone release coating 41 on the second release surface 38. In particular, the silicone release coating 41 on the second release surface 38 may be thicker than the silicone release coating 40 on the first release surface 36. Alternately, the silicone release coating 41 on the second release surface 38 may contain a heavier coverage of silicone release material than the silicone release coating 40 on the first release surface 36. In addition, any non-silicone release coating, including water-based release coatings, all well known to those skilled in the art, may be used in the present invention as long as the release coating 40 on the first release surface 36 is provided with less release than the release coating 41 on the second release surface 38.

The adhesive 34 may be any thermoplastic adhesive known to those skilled in the art, such as hot melt thermoplastic adhesives such as acrylics, natural and synthetic rubber-based adhesives, and amorphous polyolefin adhesives, pressure-sensitive silicones. Alternatively, pressure sensitive water-based adhesives can be used instead, thereby obviating the need for the carrier material 32 having high temperature characteristics. The adhesives or glues contemplated by the present invention include those demonstrating good adherence to a wide number of materials, such as fabric, paper, wood, resin, plastics, metals, ceramic, foil, glass, expanded synthetic foam, and/or cement. The adhesive may be permanent or semi-permanent, and have any of a wide range of tack (degree of adhesiveness), depending on the specific project application.

The adhesive 34 (using the typical hot melt thermoplastic adhesive material as the example used herein) is dispensed onto the first release surface 36 of the carrier material in a continuous strip along its longitudinal dimension "L" in any position across its transverse width dimension "W," at approximately about 350 degrees Fahrenheit. However, application temperature can depend on the type of thermoplastic adhesive, the carrier material, and/or the release coating selected, and therefore the application temperature will vary depending on there factors.

The adhesive 34 is preferably dispensed by a thermoplastic glue metering nozzle and supplied by a metering pump, as will be well known to those skilled in the art and as disclosed in U.S. Patent No. 5,935,670 and U.S. Patent No. 6,319,442 both previously incorporated by reference. As the first release surface 36 of the carrier material 32 moves underneath thermoplastic glue metering nozzle, the adhesive 34 is dispensed onto the carrier material 32. An air jet may be directed onto the first release surface 36 to cool the adhesive 34 as the carrier material 32 moves along.

Preferably, after application of the adhesive, the carrier material 32 is cut into individual strips each having a single row of the adhesive 34, and then is wound onto a take up core 42 into rolls 30. The differential release properties of the silicone release coating 40 on the first release surface 36 and the silicone release coating 41 on the second release surface 38, the fact that the adhesive 34 was initially applied in a hot state to the first release surface 36 causing better adherence, and the fact that there is some cooling and hence "skinning over" of the adhesive 34 prior to the unwinding the take up core 42 all ensure that the adhesive 34 remains adhered to the first release surface 36 as the roll 30 is subsequently unwound.

As best illustrated in Fig. 1, because the carrier material 32 is transparent, the adhesive 34 is readily viewable from the second release surface 38 of the carrier material 32. Note that in Fig. 1, the portion of the adhesive 34 that is visible on the roll of adhesive dispensing tape 30 is actually under the carrier material 32, and is viewed therethrough. The portion of the adhesive 34 on the unrolled portion of the carrier material 32 is on the top side as viewed in Fig. 1. (Those skilled in the art will also appreciate that a roll may instead be wound with the adhesive segments facing outward from the release surface on the roll, although this is not the preferred method since the adhesive segments would then be on the outside of the roll.) It will be appreciated by those skilled in the art that when positioning the adhesive 34 on the desired object or craft project, a user can easily see exactly where the adhesive 34 is being applied, thereby eliminating guess work as to the correct positioning of the adhesive 34.

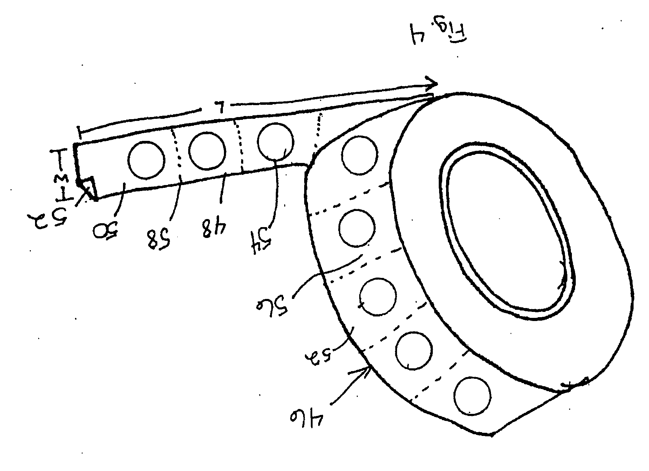

As also illustrated in Fig. 1, the carrier material may contain transverse or lateral perforations 44 which facilitate dispensing of the adhesive 34 into short segments or longer pieces. Fig. 3 illustrates a variation of the roll of adhesive dispensing tape 30 in which the transparent carrier material 32 does not contain perforations. Instead, the adhesive 34 may be cut by the user (with scissors, for example) in precise lengths for use.

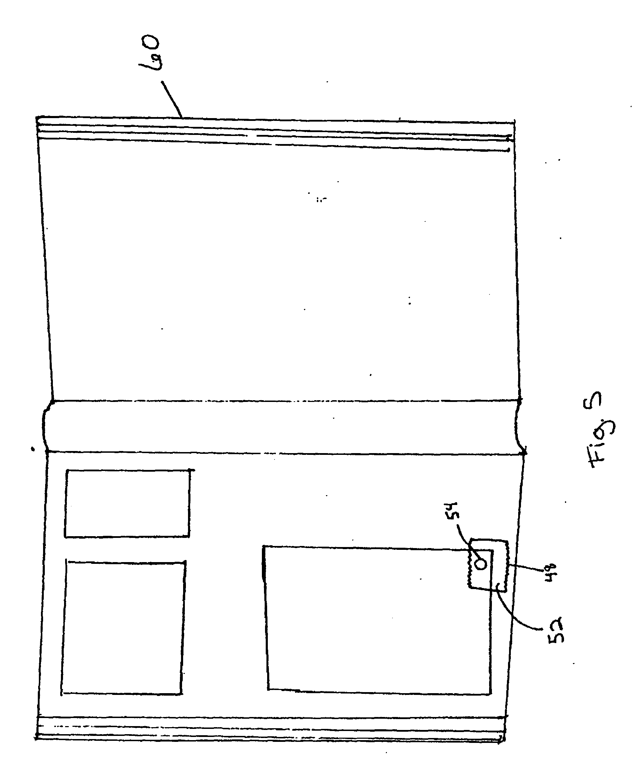

Fig. 4 illustrates a second embodiment of the present invention including a roll of adhesive dispensing tape 46 including a transparent carrier material 48 having a first release surface 50 and a second release surface 52, each coated with a silicone release coating (not shown in Fig. 4) in a similar manner to that detailed with respect to the first embodiment shown in Figs. 1 and 2. The silicone release coating is selectively applied so that the first release surface 50 provides less release than the second release surface 52. In particular, the second release surface 52 may contain a thicker coating of silicone release coating and/or contain a heavier coverage of silicone release coating than that applied to the first release surface 50.

A plurality of adhesive segments 54 are disposed on the first release surface 50 in a spaced-apart fashion along the longitudinal dimension "L" of the carrier material 48. Note that in Fig. 4, the portion of the adhesive segments 54 that are visible on the roll of adhesive dispensing tape 46 are actually under the carrier material 48, and are viewed therethrough. The portion of the adhesive segments 54 on the unrolled portion of the carrier material 48 are on the top side as viewed in Fig. 4.

The adhesive segments 54 may be located in a straight line, or they may be disposed along the length of the carrier material 48 in any position across its transverse width dimension "W," i.e. in a zigzag pattern, a diagonal pattern, or in other types of repeating patterns along the length of the carrier material 48. Preferably, there will be only a single adhesive segment 54 located in a transverse position of the carrier material 48 at any given longitudinal position along the length of the carrier material 48, as illustrated in Fig. 4. However, consistent with the broader aspects of the present invention and as shown in Fig. 9 (which will be discussed later), there may be multiple lines of adhesive segments 54 extending longitudinally along the carrier material 48, or multiple adhesive segments 48 disposed in a row across the transverse dimension of the carrier material 48 at a given longitudinal position along the length of the carrier material 48.

Preferably, the spacing of the adhesive segments 54 is such that the adhesive segments 54 do not overlap along the longitudinal length "L" or across the transverse width "W" of the carrier material 48. This ensures that there is a margin 56 surrounding each adhesive segment 54 such that an individual adhesive segment 54 may be exposed to the surface of an object without the risk of the object contacting multiple adhesive segments 54.

As described above, the silicone release coating in combination with the construction of the roll of adhesive dispensing tape 46 ensures that the adhesive segments 34 remain adhered to the first release surface 36 as the roll of adhesive dispensing tape 46 is unwound.

As further illustrated in Fig. 4, the roll of adhesive dispensing tape 46 includes perforations 58 for separating an individual adhesive segment 54 from the roll of adhesive dispensing tape 46. Alternatively, it will be readily apparent to those skilled in the art that the roll 46 of adhesive dispensing tape 46 may be manufactured without the perforations 58.

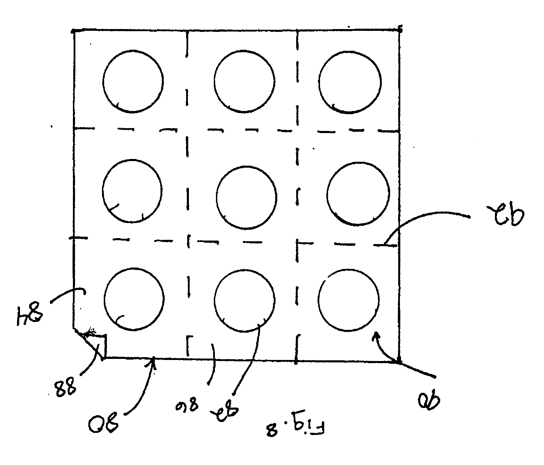

As illustrated in Fig. 5, an individual adhesive segment 54 is separated from the roll of adhesive dispensing tape 46 (shown in Fig. 4) using the perforations 58. Because the carrier material 48 is transparent, the adhesive segment 54 can easily be seen through the carrier material 48. As such, the adhesive segment 54 on the first release surface 50 can be easily positioned over a scrapbook 60 or other item in the precise location of its intended application. Once correctly positioned, the adhesive segment 54 may be applied to the scrapbook 60 by contacting the adhesive segment 54 with the desired surface.

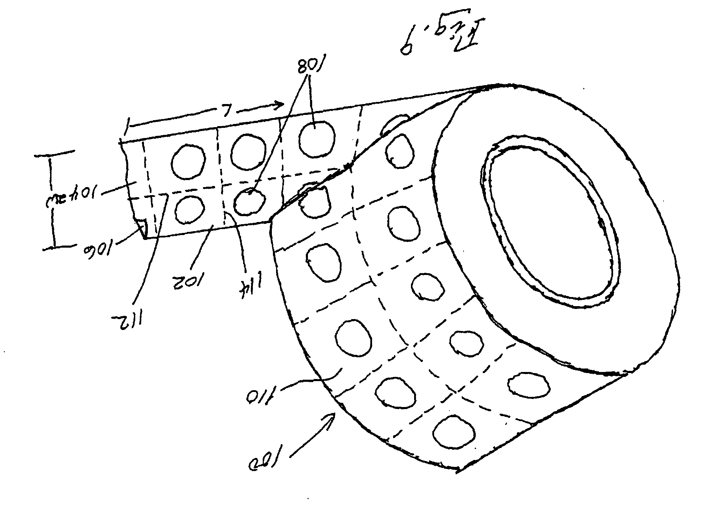

Turning next to Figs. 6 and 7, it will be readily apparent to those skilled in the art that any size or shape of adhesive may be applied to the transparent carrier material. For example, as illustrated in Fig. 6, a carrier material 62 may include adhesive line segments 64 on a first release surface 66 of the transparent carrier material 62. The transparent carrier material 62 may optionally be provided with perforations 68 for easy separation of individual adhesive segments 64.

Likewise, as illustrated in Fig. 7, colored, adhesive stars 70 may be provided on a first release surface 72 of a transparent carrier material 74. The transparent carrier material 74 may optionally be provided with perforations 76 for easy separation of individual adhesive stars 70. This embodiment illustrated both the use of shapes (which may vary and could include, for example, squares, triangles, etc.) and colors (which are facilitated by simply adding a dye or colorant.

Accordingly, consistent with the broader aspects of the present invention, the adhesive may be disposed on the transparent carrier material in a wide variety of sizes, shapes, colors (including transparent adhesives) and scents. For example, in making an adhesive segment for use with gift cards secured to a letter or other paper sheet for a coffee franchise, adhesive segments which smell like coffee could be used. Further, the adhesive segments may very in thickness from being very thin to being relatively thick, depending on the desired end-use application.

Fig. 8 illustrates a another embodiment of the present invention in which a sheet 80 of adhesive segments 82 is provided. The sheet 80 includes a transparent carrier material 84 having a first release surface 86 and a second release surface 88. Both the first release surface 86 and the second release surface 88 of the transparent carrier material 84 are coated with a silicone release coating (not shown in Fig. 8) in the same manned as described with earlier embodiments. The silicone release coating is selectively applied so that the first release surface 86 provides less release than the second release surface 88. In particular, the second release surface 88 may contain a thicker coating of silicone release coating and/or contain a heavier coverage of silicone release coating than that applied to the first release surface 86. Alternately, only the surface upon which the adhesive segments 82 are located (the first release surface 86) may have a coating of silicone release coating thereon.

A plurality of adhesive segments 82 are disposed on the first release surface 86 in a spaced-apart fashion and are separated from each other by a margin 90 such that an individual adhesive segment 82 may be exposed to the surface of an object without the risk of the object picking up multiple adhesive segments 82. Further, optional perforations 92 permit each individual adhesive segment 82 to be separated from the sheet 80.

Because the carrier material 84 is transparent, each adhesive segment 82 can be easily seen through the second release surface 88 of the carrier material 84. As such, the adhesive segments 82 on the first release surface 86 can be easily positioned over an item in the precise location of its intended application. Once correctly positioned, the adhesive segment 82 may be applied to the object by contacting the adhesive segment 82 with the desired surface. It will also be appreciated by those skilled in the art that a cover sheet (not shown herein) of release material could be added to the configuration shown in Fig. 8. The cover sheet may be of a solid color rather than clear (or clear, if desired), and differential release properties would be used to ensure that the adhesive segments 82 would have less adherence to the cover sheet than they would have to the first release surface 86.

Turning finally to Fig. 9, an embodiment of the present invention including a roll of adhesive dispensing tape 100 including a transparent carrier material 102 having a first release surface 104 and a second release surface 106, each coated with a silicone release coating (not shown in Fig. 9) in a similar manner to that detailed with respect to the first embodiment shown in Figs. 1 and 2. The silicone release coating is selectively applied so that the first release surface 104 provides less release than the second release surface 106. In particular, the second release surface 106 may contain a thicker coating of silicone release coating and/or contain a heavier coverage of silicone release coating than that applied to the first release surface 104.

A plurality of adhesive segments 108 are disposed on the first release surface 104 in a spaced-apart fashion in two parallel rows along the longitudinal dimension "L" of the carrier material 102. The adhesive segments 108 may be located in two straight lines, or they may be disposed along the length of the carrier material 102 in a repeating pattern along the length and in half of the total width "2W" of the carrier material 102. Note that in Fig. 9, the portion of the adhesive segments 108 that are visible on the roll of adhesive dispensing tape 100 are actually under the carrier material 102, and are viewed therethrough. The portion of the adhesive segments 108 on the unrolled portion of the carrier material 102 are on the top side as viewed in Fig. 9.

Preferably, the spacing of the adhesive segments 108 is such that the adhesive segments 108 do not overlap along the longitudinal length "L" or across the centerline of the transverse width "2W" of the carrier material 102. This ensures that there is a margin 110 surrounding each adhesive segment 108 such that an individual adhesive segment 108 may be exposed to the surface of an object without the risk of the object contacting multiple adhesive segments 108.

As described above, the silicone release coating in combination with the construction of the roll of adhesive dispensing tape 100 ensures that the adhesive segments 108 remain adhered to the first release surface 104 as the roll of adhesive dispensing tape 100 is unwound.

As further illustrated in Fig. 9, the roll of adhesive dispensing tape 100 includes a longitudinal perforation 112 for separating portions of the carrier material 102 in the roll of adhesive dispensing tape 100 into two strips each having a single row of adhesive segments 108. It will be appreciated by those skilled in the art that rolls of adhesive dispensing tape can also be made with more than two strips each having a single row of adhesive segments, i.e. three strips or four strips. Optionally, the roll of adhesive dispensing tape 100 also or instead include perforations 114 for separating a portion of the carrier material 102 in the roll of adhesive dispensing tape 100 carrying only a single adhesive segment in the longitudinal direction "L." If the roll of adhesive dispensing tape 100 includes both the perforations 112 and the perforations 114, individual adhesive segments 108 may be separated from the roll of adhesive dispensing tape 100.

It may therefore be appreciated from the above detailed description of the adhesive dispensing tape of the present invention including a thermoplastic, pressure sensitive, adhesive segment is provided on a transparent backing material for easy placement of the adhesive in precise locations on an object. It will also be appreciated that the present invention provides a method for dispensing pressure sensitive adhesives that permits the user of the adhesive the ability to see the adhesive segment to be applied, and visually guide its precise placement on an object.

The present invention also provides a wide variety of adhesive dispensing tapes (or adhesive dispensing sheets) for use in specialty projects, including pre-metered adhesives in the form of specific shapes, sizes, colors, and scents for easy and precise application to a craft project. Accordingly, the present invention provides an adhesive dispensing tape or sheet including a transparent backing material for use in a variety of applications including craft making and household applications as well as commercial and/or industrial applications.

Although the foregoing description of the adhesive dispensing tape including a transparent carrier sheet of the present invention has been shown and described with reference to particular embodiments and applications thereof, it has been presented for purposes of illustration and description and is not intended to be exhaustive or to limit the invention to the particular embodiments and applications disclosed. It will be apparent to those having ordinary skill in the art that a number of changes, modifications, variations, or alterations to the invention as described herein may be made, none of which depart from the spirit or scope of the present invention. The particular embodiments and applications were chosen and described to provide the best illustration of the principles of the invention and its practical application to thereby enable one of ordinary skill in the art to utilize the invention in various embodiments and with various modifications as are suited to the particular use contemplated. All such changes, modifications, variations, and alterations should therefore be seen as being within the scope of the present invention as determined by the appended claims when interpreted in accordance with the breadth to which they are fairly, legally, and equitably entitled.

## Claims

1. An adhesive dispensing tape for precise placement of adhesive comprising:
a transparent carrier material having a transverse width, a longitudinal length and opposing first and second release surfaces;
a release coating applied to each of said first and second release surfaces, said release coating providing said first release surface less release than said second release surface; and
a plurality of pressure sensitive adhesive segments non-contiguously applied to said first release surface of said transparent carrier material along the longitudinal length of said transparent carrier material, each of said pressure sensitive adhesive segments being visible through said transparent carrier tape from said second release surface to said first release surface.

2. An adhesive dispensing tape as defined in Claim 1, wherein said longitudinal length of said transparent carrier material comprises a plurality of contiguous longitudinal segments extending along the entire longitudinal length and wherein only a single one of said adhesive segments is applied within each of said longitudinal segments on the first release surface of said transparent carrier material.

3. An adhesive dispensing tape as defined in Claim 1 or Claim 2, wherein each of said adhesive segments are disposed along the longitudinal length of said transparent carrier material in at least one position across the transverse width of said transparent carrier material.

4. An adhesive dispensing tape as defined in any preceding Claim, wherein each of said adhesive segments is separated from any other of said adhesive segments by perforations.

5. An adhesive dispensing tape as defined in any preceding Claim, wherein said pressure sensitive adhesive segments are formed in the shape of disks, lines, stars, ovals, squares, diamonds, triangles, or a combination thereof.

6. An adhesive dispensing tape as defined in any preceding Claim, wherein said transparent carrier material is constructed from polyester, polyethylene, polyvinyl chloride, vinyl, polystyrene, polyimide, polyolefin, and combinations thereof.

7. An adhesive dispensing tape as defined in any preceding Claim, wherein said release coating is a silicone release coating.

8. An adhesive dispensing tape as defined in any preceding Claim, wherein said transparent carrier material is wound into a coil after application of said pressure sensitive adhesive segments and wherein said carrier material may be unwound from the coil with said adhesive segments being retained on said first release surface.

9. An adhesive dispensing apparatus for use in applying adhesive to discrete locations on an object comprising:
a transparent carrier material including a longitudinal length and a transverse width and having opposing first and second release surfaces; and
a continuous strip of pressure sensitive adhesive disposed on said first release surface of said transparent carrier material extending along the longitudinal length thereof;
wherein said pressure sensitive adhesive strip is visible through said transparent carrier tape from said second release surface to said first release surface when said adhesive strip is applied to the object.

10. An adhesive dispensing apparatus as defined in Claim 9, wherein said transparent carrier material is wound into a coil after application of said pressure sensitive adhesive strip and wherein said carrier material may be unwound from the coil with said adhesive strip being retained on said first release surface.

11. An adhesive dispensing apparatus as defined in Claim 9 or Claim 10, wherein said continuous strip of adhesive is disposed in a straight line along the longitudinal length of said transparent carrier material at substantially a midpoint of the transverse width of the carrier material.

12. An adhesive dispensing apparatus as defined in Claim 9, 10 or 11, wherein said transparent carrier material is constructed from polyester, polyethylene, polyvinyl chloride, vinyl, polystyrene, polyimide, polyolefin, and combinations thereof.

13. An adhesive dispensing apparatus as defined in any one of Claims 9 to 12, further comprising a release coating applied to each of said first and second release surfaces, said release coating providing said first release surface less release than said second release surface, said release coating optionally being a silicone release coating.

14. An adhesive dispensing apparatus as defined in any one of Claims 9 to 13, further comprising a plurality of perforations formed in both said carrier material and said continuous adhesive strip, each of said perforations located at a different position along the longitudinal length of said carrier material and extending across the transverse width of said carrier material, and wherein a segment of said continuous adhesive strip disposed on a segment of said carrier material can optionally be separated from a remaining portion of said continuous adhesive strip on a remaining portion of said transparent carrier material.

15. An adhesive dispensing product for precise placement of adhesive comprising:
a transparent carrier material having a transverse width defined by first and second edges, a longitudinal length defined by a first end and a second end and opposing first and second release surfaces; and
a plurality of pressure sensitive adhesive segments non-contiguously applied to said first release surface of said transparent carrier material, each of said pressure sensitive adhesive segments being visible through said transparent carrier tape from said second release surface to said first release surface.

16. An adhesive dispensing product as defined in Claim 15, wherein said carrier material is a rectangular sheet and wherein said pressure sensitive adhesive segments are non-contiguously applied to said first release surface of said transparent carrier material in a plurality of rows extending from said first edge to said second edge of said transverse width of said rectangular sheet from said first end to said second end of said longitudinal length of said carrier material,
said rows of adhesive segments are optionally not linear.

17. An adhesive dispensing product as defined in Claim 16, wherein said carrier material is a carrier strip and wherein said pressure sensitive adhesive segments are non-contiguously disposed on said first release surface of said carrier strip along said longitudinal length,
said carrier strip may be wound into a coil after application of said pressure sensitive adhesive segments and wherein said carrier material may be unwound from the coil with said adhesive segments being retained on said first release surface.

18. An adhesive dispensing product as defined in any one of Claims 15 to 17, wherein said pressure sensitive adhesive segments are formed in the shape of disks, lines, stars, ovals, squares, diamonds, triangles, and combinations thereof.

19. An adhesive dispensing product as defined in any one of Claims 15 to 18, wherein said pressure sensitive adhesive segments are transparent, colored, scented or a combination thereof.

20. An adhesive dispensing product as defined in any one of Claims 15 to 19, wherein said transparent carrier material is constructed from polyester, polyethylene, polyvinyl chloride, vinyl, polystyrene, polyimide, polyolefin, and combinations thereof.

21. An adhesive dispensing product as defined in any one of Claims 15 to 20, further comprising a plurality of perforations formed within said transparent carrier material, wherein a single adhesive segment can be separated from a remainder of said adhesive segments on said carrier material by perforating said carrier material.

22. An adhesive dispensing product as defined in any one of Claims 15 to 21, further comprising a release coating applied to each of said first and second release surfaces, said release coating providing said first release surface less release than said second release surface,
said release coating optionally being a silicone release coating.

23. An adhesive dispensing tape for precise placement of adhesive comprising:
a transparent carrier tape having a transverse width, a longitudinal length including a plurality of contiguous longitudinal segments extending along the entire longitudinal length, each of said longitudinal segments extending the entire transverse width of said flexible carrier tape, said transparent carrier tape also having opposing first and second release surfaces; and
a plurality of pressure sensitive adhesive segments non-contiguously applied to said first release surface of said transparent carrier material along the longitudinal length of said transparent carrier material, wherein only a single one of said adhesive segments is applied within each of said longitudinal segments on the first release surface of said transparent carrier material, each of said pressure sensitive adhesive segments being visible through said transparent carrier tape from said second release surface to said first release surface.

24. An adhesive dispensing tape as defined in Claim 23, further comprising a plurality of perforations formed within said transparent carrier material, wherein a single adhesive segment can be separated from a remainder of said adhesive segments on said carrier material by perforating said carrier material.

25. A method of manufacturing thermoplastic adhesive dispensing tape comprising the steps of:
(a) unrolling a transparent flexible carrier material to expose a first release surface, said transparent, flexible carrier material extending longitudinally, having a transverse width, and having a second release surface opposite the first release surface;
(b) dispensing pressure sensitive adhesive at periodic intervals on the unrolled transparent flexible carrier material to provide at least two separate portions of pressure sensitive adhesive at transversely separated locations; and
(c) providing perforations to separate the transparent, flexible carrier strip into multiple segments having at least one portion of pressure sensitive adhesive.
